# EUROPÄISCHE PATENTSCHRIFT

(11) **EP 3 081 413 B1**
(45) Veröffentlichungstag und Bekanntmachung des Hinweises auf die Patenterteilung: **22.05.2019**
(21) Anmeldenummer: 16000189.7
(22) Anmeldetag: 27.01.2016
(51) Int. Cl.: B60H 1/34, B60H 3/00, B60H 1/00

(54) **KRAFTFAHRZEUG UMFASSEND EINE BELÜFTUNGSEINRICHTUNG ZUM ZUFÜHREN VON LUFT IN DAS INNERE DES FAHRZEUGS**
MOTOR VEHICLE COMPRISING A VENTILATION SYSTEM FOR SUPPLYING AIR TO THE INTERIOR OF THE VEHICLE
VEHICULE AUTOMOBILE COMPRENANT UN DISPOSITIF D'AERATION DESTINE A ACHEMINER L'AIR DANS L'HABITACLE DU VEHICULE AUTOMOBILE

(30) Priorität: 16.04.2015 DE 102015004846
(43) Veröffentlichungstag der Anmeldung: 19.10.2016
(73) Patentinhaber: AUDI AG, 85045 Ingolstadt (DE)
(72) Erfinder: Belz, Karsten, DE - 85051 Ingolstadt (DE); Techel, Georg, DE - 01156 Dresden (DE); Radeke, Falko, DE - 85375 Neufahrn (DE)

(56) Entgegenhaltungen:
- DE-A1-102008 033 884
- DE-U1-202005 009 940
- FR-A1- 2 841 184

## Beschreibung

Die Erfindung betrifft ein Kraftfahrzeug umfassend eine Belüftungseinrichtung zum Zuführen von Luft in das Innere des Fahrzeugs, welche Belüftungseinrichtung wenigstens eine zum Inneren des Fahrzeug gerichtete Luftaustrittsdüse umfasst, der über einen Luftkanal Luft zuführbar ist wobei die Luftaustrittsdüse einen ersten Austrittsbereich für die zugeführte Luft und einen von diesem getrennten zweiten Austrittsbereich, der mit einem Kanal, über den ein gasförmiger Duftstoff zuführbar ist, verbunden ist, aufweist,

Moderne Kraftfahrzeuge ermöglichen eine sehr gute Belüftung des Fahrzeuginneren, sei es durch Frischluft, sei es durch über eine Klimaanlage klimatisierte Luft. Im Fahrzeuginneren sind beispielsweise im Bereich des Armaturenbretts eine oder mehrere Luftaustrittsdüsen angeordnet, über die der Fahrer respektive Beifahrer die Luftzufuhr regeln kann. Üblicherweise weist eine solche Luftaustrittsdüse ein Lamellenpaket auf, das manuell verstellt werden kann, um die Luftströmung auszurichten. Im Inneren der Luftaustrittsdüse ist üblicherweise eine Klappe oder Ähnliches vorgesehen, die über ein ebenfalls manuell bedienbares Stellelement geöffnet und geschlossen werden kann, um die Luftzufuhr zu ermöglichen oder zu unterbinden.

Über die Belüftungseinrichtung ist wie beschrieben entweder Frischluft oder klimatisierte Luft zuführbar. Um das Innere des Fahrzeugs zu beduften ist es bekannt, Duftspender vor der Luftaustrittsdüse anzuordnen, die in wenngleich geringer Menge einen Duftstoff emittieren, der über die aus der Luftaustrittsdüse strömende Luft im Fahrzeuginneren verteilt wird. Diese Art der Innenraumbeduftung ist umständlich und unansehlich.

Ein Luftausströmer für ein Kraftfahrzeug der eingangs genannten Art ist aus DE 28 41 184 A1 bekannt. Bei diesem Luftausströmer kann Luft durch einen Kanal zu einer ersten Luftaustrittsdüse, welche zu dem Fahrzeuginnenraum gerichtet ist, geführt werden, wobei ein Teil der durch den Kanal strömenden Luft abgezweigt und durch eine Kammer geführt werden kann, in der sich die hindurchströmende Luft mit einem Duftstoff, der von einem Diffusionselement an die durchströmende Luft abgegeben wird, anreichern kann. Diese mit einem Duftstoff angereicherte Luft verlässt die Kammer anschließend durch eine entsprechende Öffnung in den Innenraum. Durch einen Mechanismus kann sowohl die Öffnung, die den Kanal mit der Kammer verbindet, sowie die zum Innenraum des Fahrzeugs gerichtete Öffnung verschlossen werden. Im verschlossenen Zustand der beiden Öffnungen strömt die Luft ausschließlich durch den Kanal und durch die Luftaustrittsöffnung in den Innenraum des Kraftfahrzeugs. Eine Zufuhr des Duftstoffs ist in diesem Fall nicht möglich.

Der Erfindung liegt damit das Problem zugrunde, ein demgegenüber verbessertes Kraftfahrzeug anzugeben.

Zur Lösung dieses Problems ist bei einem Kraftfahrzeug der eingangs genannten Art erfindungsgemäß ein klappenartiges Absperrelement vorgesehen, über das der Zuströmquerschnitt für zugeführte Luft absperrbar ist, wobei der gasförmige Duftstrom unabhängig von der Position des Absperrelements stets zuführbar ist.

Erfindungsgemäß wird die der Fahrzeugbelüftung dienende Luftaustrittsdüse auch zur Verbreitung eines gasförmigen Duftstoffs verwendet. Hierzu ist die Luftaustrittsdüse in zwei Austrittsbereiche getrennt. Der erste, bevorzugt deutlich größere Austrittsbereich dient dazu, die zugeführte Luft in das Fahrzeuginnere ausströmen zu lassen. Der zweite Austrittsbereich ist zum Ausströmen eines gasförmigen Duftstoffs vorgesehen. In den zweiten Austrittsbereich mündet ein Kanal, über den von einer Duftstoffquelle ein gasförmiger Duftstoff zugeführt werden kann. Dieser strömt, wenn eine Beduftung gewünscht wird, über den zweiten Austrittsbereich in das Fahrzeuginnere. Die Beduftung kann beispielsweise durch Betätigen einer Taste vom Benutzer angewählt werden, woraufhin ein Gebläse oder dergleichen zugeschaltet wird, über das der Duftstoff aus der Duftstoffquelle abgezogen und über den Kanal zum zweiten Austrittsbereich geblasen wird.

Da die Luftaustrittsdüse in Bezug auf die Innenraumbelüftung an einer optimierten Position angeordnet ist, kann folglich auch der Duftstoff an einer für eine gute und allseitige Verbreitung zweckmäßigen Stelle ausströmen. Die Luftaustrittsdüse wird also multifunktional verwendet.

Der zweite Austrittsbereich ist dabei bevorzugt nicht verschließbar, das heißt, dass ihm kein Lamellenpaket oder Ähnliches vorgeschaltet ist, über welches der erste Austrittsbereich verschlossen respektive die Ausströmrichtung der zugeführten Luft variiert werden kann.

Der erste und der zweite Austrittsbereich können über ein feststehendes Wandelement voneinander getrennt sein. Das heißt, dass über den ersten Austrittsbereich nur die Luft und über den zweiten Austrittsbereich nur der gasförmige Duftstoff ausströmen kann.

Alternativ dazu kann der erste und der zweite Austrittsbereich auch über ein verstellbares Wandelement derart getrennt sein, dass in einer Schließstellung des Wandelements die anströmende Luft nur dem ersten Austrittsbereich zugeführt wird, während bei geöffnetem Wandelement die Luft beiden Austrittsbereichen zugeführt wird. Das heißt, dass die Luft je nach Stellung des Wandelements entweder nur über den ersten Austrittsbereich oder über den ersten und den zweiten Austrittsbereich strömen kann. Demgegenüber kann der Duftstoff nur über den zweiten Austrittsbereich zugeführt werden. Ist nun das Wandelement geöffnet, so kann der Duftstoff mit der auch aus dem zweiten Austrittsbereich strömende zugeführte Frischluft gemischt werden und mitgenommen respektive verteilt werden, das heißt, er reichert die Luftströmung an.

Ein solches bewegliches Wandelement ist bevorzugt schwenkbar gelagert und über ein an der zum Inneren gerichteten Seite der Luftaustrittsdüse vorgesehenes, manuelles Bedienelement verstellbar. Ein solches Bedienelement kann beispielsweise ein Drehrad oder Hebel oder Ähnliches sein.

Wie bereits beschrieben ist üblicherweise ein klappenartiges Absperrelement vorgesehen, über das der Zuströmquerschnitt für zugeführte Luft absperrbar ist. Das heißt, dass über dieses Absperrelement der gesamte Strömungsquerschnitt der Luftaustrittsdüse geschlossen werden kann. Erfindungsgemäß ist die Anordnung nun derart, dass der gasförmige Duftstrom unabhängig von der Position des Absperrelements stets zuführbar ist. Das heißt, dass zwar der Luftstrom gesperrt werden kann, jedoch stets der gasförmige Duftstrom über den zweiten Austrittsbereich zum Fahrzeuginneren zugeführt werden kann, wenn dies vom Nutzer gewünscht wird.

Als Kanal, über den der gasförmige Duftstoff in den zweiten Austrittsbereich geführt wird, ist bevorzugt ein Schlauch vorgesehen, der von der Duftstoffquelle zum zweiten Austrittsbereich führt. Der Kanal respektive Schlauch ist natürlich derart an der Luftaustrittsdüse angeordnet, dass der zugeführte Duftstoff ausschließlich in das Düseninnere gelangt und zum Fahrzeuginneren abgegeben werden kann.

Neben dem Kraftfahrzeug selbst betrifft die Erfindung ferner eine Luftaustrittsdüse für ein solches Kraftfahrzeug. Diese Luftaustrittsdüse zeichnet sich dadurch aus, dass sie einen ersten Austrittsbereich für über einen Luftkanal zuführbare Luft und einen von diesem getrennten zweiten Austrittsbereich, der mit einem Kanal, über den ein gasförmiger Duftstoff zuführbar ist, verbindbar ist, aufweist, und dass ein klappenartiges Absperrelement vorgesehen ist, über das der Zuströmquerschnitt für zuführbare Luft absperrbar ist, wobei der gasförmige Duftstrom unabhängig von der Position des Absperrelements stets zuführbar ist.

Weitere Vorteile und Einzelheiten der erfindungsgemäßen Luftaustrittsdüse ergeben sich aus den Unteransprüchen.

Weitere Vorteile und Einzelheiten der Erfindung ergeben sich aus dem nachfolgend beschriebenen Ausführungsbeispiel sowie anhand der Zeichnungen. Dabei zeigen:
- Fig.1: eine Prinzipdarstellung eines erfindungsgemäßen Kraftfahrzeugs,
- Fig. 2: eine Vorderseitenansicht einer erfindungsgemäßen Luftaustrittsdüse,
- Fig. 3: eine Schnittansicht in Form einer Prinzipdarstellung durch eine erfindungsgemäße Luftaustrittsdüse gemäß Fig. 2,
- Fig. 4: eine Schnittansicht in Form einer Prinzipdarstellung einer zweiten Ausführungsform einer Luftaustrittsdüse mit beweglichem Wandelement, und
- Fig. 5: eine Ansicht gemäß Fig. 4 mit in einer zweiten Position befindlichem Wandelement.

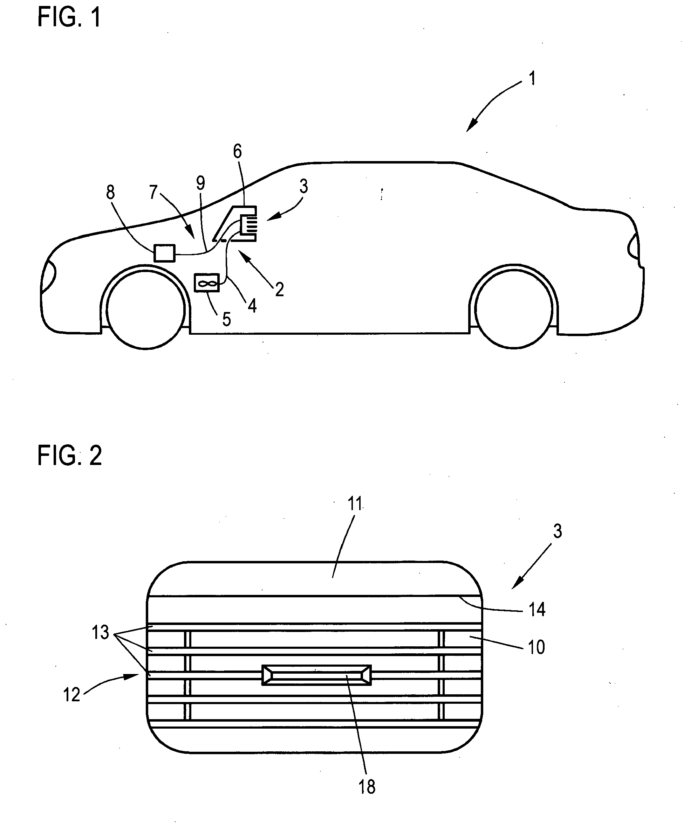

Fig. 1 zeigt ein erfindungsgemäßes Kraftfahrzeug 1, umfassend eine Belüftungseinrichtung 2 zum Zuführen von Luft in das Innere des Fahrzeugs. Die Belüftungseinrichtung 2 umfasst wenigstens eine zum Inneren des Fahrzeugs gerichtete Luftaustrittsdüse 3, der über einen Luftkanal 4 Luft zuführbar ist, wofür exemplarisch ein Gebläse 5 dargestellt ist. Das Gebläse 5 ist exemplarisch für eine Klimaanlage oder Ähnliches, wie sie in an sich bekannter Weise bei modernen Kraftfahrzeugen vorgesehen ist, dargestellt.

Die Luftaustrittsdüse 3 ist im gezeigten Beispiel an einem Armaturenbrett 6 angeordnet, wobei üblicherweise mehrere solcher Luftaustrittsdüsen über die Breite des Armaturenbretts verteilt vorgesehen sind. Mitunter sind auch Luftaustrittsdüsen im Bereich der B-Säule und im Fahrzeugfond vorgesehen. Diese werden über das gemeinsame Gebläse 5 bedient.

In jedem Fall ist es über die Luftaustrittsdüse 3 möglich, gezielt Luft in das Innere des Fahrzeugs zu führen, sei es Frischluft, sei es über die Klimaanlage temperierte Luft.

Vorgesehen ist des Weiteren eine Einrichtung 7 zur Zufuhr eines gasförmigen Duftstoffs in das Fahrzeuginnere. Die Einrichtung 7 umfasst ein Duftstoffreservoir 8, dem gegebenenfalls eine nicht näher gezeigte Fördereinrichtung in Form eines kleinen Gebläses oder dergleichen nachgeschaltet ist. Über einen Kanal 9 wird der gasförmige Duftstoff ebenfalls der Luftaustrittsdüse 3 zugeführt. Über ein nicht näher gezeigtes Bedienelement kann die Duftstoffzufuhr zugeschaltet oder abgeschaltet werden, beispielsweise in dem über das Bedienelement der Kanal 9 nahe des Duftstoffreservoirs 8 geschlossen und geöffnet werden kann, oder in dem eine dem Kanal 9 zugeordnetes Fördereinrichtung wie ein Gebläse oder dergleichen zu- oder abgeschaltet wird.

Fig. 2 zeigt eine Vorderseitenansicht der Luftaustrittsdüse 3. Diese umfasst zwei Bereiche, nämlich einen ersten Austrittsbereich 10, durch den zugeführte Luft austritt, sowie einen zweiten Austrittsbereich 11, dem der gasförmige Duftstoff zugeführt wird.

Der erste Austrittsbereich 10 ist im Ausströmquerschnitt über ein Lamellenpaket 12 umfassend eine Vielzahl einzelner Lamellen 13, die gekoppelt über ein gemeinsames Bedienelement 18 um eine Horizontalachse verkippbar und gegebenenfalls zur Seite verschwenkbar sind, zugeordnet. Hierüber kann die Ausströmöffnung im Querschnitt variiert werden wie auch die Ausströmrichtung verstellt werden.

Der zweite Ausströmbereich 11 ist über eine feststehende Lamelle 14 sowie ein ihr nachgeschaltetes Wandelement 15 vom ersten Ausströmbereich 10 getrennt.

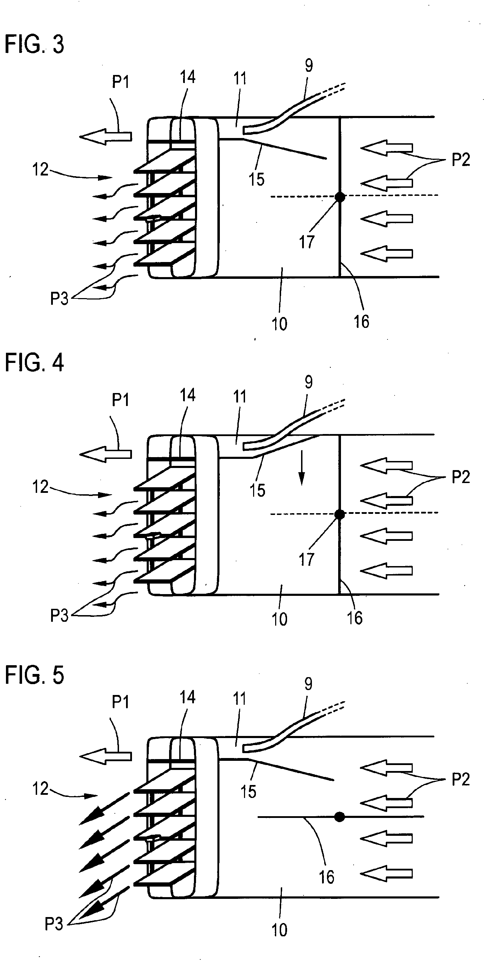

Beim Ausführungsbeispiel gemäß Fig. 3 sei angenommen, dass das Wandelement 15 feststehend ist, mithin also in seiner Ausrichtung nicht verändert werden kann.

In den zweiten Austrittsbereich 11 mündet der Kanal 9, über den der gasförmige Duftstoff zugeführt werden kann, der aus dem zweiten Austrittsbereich 11 zum Fahrzeuginneren austritt, wie durch den Pfeil P1 dargestellt ist.

Die zuströmende Luft ist durch die Pfeile P2 dargestellt. Im gezeigten Ausführungsbeispiel ist ein klappenförmiges Absperrelement 16 vorgesehen, das um eine Schwenkachse 17 zwischen einer Schließstellung, die hier ausgezogen dargestellt ist, und einer Offenstellung, die hier gestrichelt dargestellt ist, über ein manuell zu betätigendes Bedienelement, beispielsweise ein Dreh-rad, verstellbar. Das Absperrelement 16 ist im gezeigten Beispiel geschlossen, das heißt, dass die anströmende Luft gemäß P2 nicht bzw. zumindest nicht gänzlich in den ersten Austrittsbereich 10 strömt. Aus dem Lamellenpaket 12 strömt daher nur, wie durch die Pfeile P3 dargestellt ist, ein relativ geringer Luftstrom.

Demgegenüber gelangt der Duftstoff ungehindert und damit unabhängig von der Stellung des Absperrelements 16 in den zweiten Ausströmbereich und gelangt in das Fahrzeuginnere.

Wird das Absperrelement 16 geöffnet, so kann aufgrund des feststehenden Wandelements ein Teil der zugeführten Luft auch in den zweiten Ausströmbereich 11 gelangen. Dort mischt sich die Luft mit dem zugeführten Duftstoff, der sodann über den Luftstrom mitgenommen wird und in das Fahrzeuginnere gelangt.

Die Fig. 4 und 5 zeigen eine Ausführungsform, die der aus Fig. 3 weitestgehend entspricht, weshalb gleiche Bezugszeichen verwendet werden. Vorgesehen ist wiederum ein erster Austrittsbereich 10 und ein zweiter Austrittsbereich 11, in dem der Kanal 9 mündet. Vorgesehen ist wiederum ein Wandelement 15, das die feststehende Lamelle 14 fortsetzt. Das Wandelement ist hier jedoch beweglich und verstellbar und kann zwischen einer Schließstellung, in der der zweite Austrittsbereich 11 vom ersten Austrittsbereich 10 abgedichtet und getrennt ist, und einer Offenstellung, in der beide Bereiche miteinander verbunden sind, verstellt werden. Hierzu kann ein entsprechendes Stellelement, beispielsweise ebenfalls ein Drehrad, vorgesehen sein.

In der in Fig. 4 gezeigten Stellung ist das Absperrelement 16 wiederum geschlossen. Die anströmende Luft gelangt folglich nicht oder nur zu einem geringen Teil in den ersten Austrittsbereich 10, weshalb nur relativ wenig Luft, siehe die Pfeile P3, das Lamellenpaket 12 passiert. Demgegenüber kann der Duftstoff unabhängig von der Stellung des Absperrelements 16 in den zweiten Austrittsbereich 11 geführt werden und in das Fahrzeuginnere abgegeben werden.

Fig. 5 zeigt schließlich die Stellung, in der das Wandelement 15 aufgeschwenkt ist. Ersichtlich liegt es nicht mehr abgedichtet an der Gehäuseoberseite der Luftaustrittsdüse 3. Die anströmende Luft, siehe die Pfeile P2, gelangt nun, nachdem auch das Absperrelement 16 geöffnet ist, in hinreichender Menge sowohl in den ersten Austrittsbereich 10, als auch in den zweiten Austrittsbereich 11, wo sie sich wiederum mit dem zugeführten Duftstoff mischen kann, der über die Luft im Fahrzeuginneren verteilt wird.

Da die Luft gemäß Pfeil P2 auch ungehindert in den ersten Austrittsbereich gelangt, ergibt sich folglich auch eine hinreichende Luftströmung durch das Lamellenpaket 12 hindurch, wie die Pfeile P3 zeigen.

Erfindungsgemäß wird also die Luftaustrittsdüse multifunktional eingesetzt. Über sie kann einerseits die Innenraumbelüftung erfolgen, andererseits auch die Innenraumbeduftung. Die Beduftung erfolgt dabei, egal ob nun ein feststehendes Wandelement oder ein bewegliches Wandelement vorgesehen ist, stets unabhängig davon, ob Luft über die Luftaustrittsdüse in den Innenraum geblasen wird, oder nicht.

## Patentansprüche

1. Kraftfahrzeug umfassend eine Belüftungseinrichtung zum Zuführen von Luft in das Innere des Fahrzeugs, welche Belüftungseinrichtung wenigstens eine zum Inneren des Fahrzeugs gerichtete Luftaustrittsdüse umfasst, der über einen Luftkanal Luft zuführbar ist, wobei die Luftaustrittsdüse (3) einen ersten Austrittsbereich (10) für die zugeführte Luft und einen von diesem getrennten zweiten Austrittsbereich (11), der mit einem Kanal (9), über den ein gasförmiger Duftstoff zuführbar ist, verbunden ist, aufweist,
**dadurch gekennzeichnet,**
**dass** ein klappenartiges Absperrelement (16) vorgesehen ist, über das der Zuströmquerschnitt für zugeführte Luft absperrbar ist, wobei der gasförmige Duftstrom unabhängig von der Position des Absperrelements (16) stets zuführbar ist.

2. Kraftfahrzeug nach Anspruch 1,
**dadurch gekennzeichnet,**
**dass** der erste und der zweite Austrittsbereich (10, 11) über ein feststehendes Wandelement (15) voneinander getrennt sind.

3. Kraftfahrzeug nach Anspruch 1,
**dadurch gekennzeichnet,**
**dass** der erste und der zweite Austrittsbereich (10, 11) über ein verstellbares Wandelement (15) derart getrennt sind, dass in einer Schließstellung des Wandelements (15) die anströmende Luft nur dem ersten Austrittsbereich (10) zugeführt wird, während bei geöffnetem Wandelement (15) die Luft beiden Austrittsbereichen (10, 11) zugeführt wird.

4. Kraftfahrzeug nach Anspruch 3,
**dadurch gekennzeichnet,**
**dass** das Wandelement (15) schwenkbar gelagert ist.

5. Kraftfahrzeug nach Anspruch 3 oder 4,
**dadurch gekennzeichnet,**
**dass** an der zum Inneren gerichteten Seite der Luftaustrittsdüse (3) ein manuelles Bedienelement zum Verstellen des Wandelements (15) vorgesehen ist.

6. Kraftfahrzeug nach einem der vorangehenden Ansprüche,
**dadurch gekennzeichnet,**
**dass** als Kanal (9) ein in den zweiten Austrittsbereich (11) führender Schlauch vorgesehen ist.

7. Luftaustrittsdüse für ein Kraftfahrzeug nach einem der vorangehenden Ansprüche, wobei sie einen ersten Austrittsbereich (10) für über einen Luftkanal (4) zuführbare Luft und einen von diesem getrennten zweiten Austrittsbereich (11), der mit einem Kanal (9), über den ein gasförmiger Duftstoff zuführbar ist, verbindbar ist, aufweist,
**dadurch gekennzeichnet,**
**dass** ein klappenartiges Absperrelement (16) vorgesehen ist, über das der Zuströmquerschnitt für zuführbare Luft absperrbar ist, wobei der gasförmige Duftstrom unabhängig von der Position des Absperrelements (16) stets zuführbar ist.

8. Luftaustrittsdüse nach Anspruch 7,
**dadurch gekennzeichnet,**
**dass** der erste und der zweite Austrittsbereich (10, 11) über ein feststehendes Wandelement (15) voneinander getrennt sind.

9. Luftaustrittsdüse nach Anspruch 7,
**dadurch gekennzeichnet,**
**dass** der erste und der zweite Austrittsbereich (10, 11) über ein verstellbares Wandelement (15) getrennt sind.

10. Luftaustrittsdüse nach einem der Ansprüche 7 bis 9,
**dadurch gekennzeichnet,**
**dass** das Wandelement (15) schwenkbar gelagert ist.

11. Luftaustrittsdüse nach Anspruch 9 oder 10,
**dadurch gekennzeichnet,**
**dass** an der Vorderseite der Luftaustrittsdüse (3) ein manuelles Bedienelement zum Verstellen des Wandelements (15) vorgesehen ist.

## Claims

1. Motor vehicle comprising a ventilation device for supplying air to the interior of the vehicle, which ventilation device comprises at least one air outlet nozzle directed to the interior of the vehicle, to which air can be supplied via an air channel, wherein the air outlet nozzle (3) has a first outlet region (10) for the supplied air and a second outlet region (11), separated therefrom, which is connected with a channel (9) via which a gaseous perfume can be supplied,
**characterised in**
**that** a flap-like shut-off element (16) is provided via which the inflow cross-section for supplied air can be shut off, wherein the gaseous perfume flow can always be supplied independently of the position of the shut-off element (16).

2. Motor vehicle according to claim 1,
**characterised in**
**that** the first and the second outlet region (10, 11) are separated from another via a stationary wall element (15).

3. Motor vehicle according to claim 1,
**characterised in**
**that** the first and the second outlet region (10, 11) are separated via an adjustable wall element (15) such that in a closed position of the wall element (15) the air flowing in is supplied only to the first outlet region (10), while when the wall element (15) is open the air is supplied to both outlet regions (10, 11).

4. Motor vehicle according to claim 3,
**characterised in**
**that** the wall element (15) is pivotably supported.

5. Motor vehicle according to claim 3 or 4,
**characterised in**
**that** on the side of the air outlet nozzle (3) oriented to the interior is provided a manual actuating element for adjusting the wall element (15).

6. Motor vehicle according to any of the preceding claims,
**characterised in**
**that** as a channel (9) is provided a hose leading into the second outlet region (11).

7. Air outlet nozzle for a motor vehicle according to any of the preceding claims, wherein it has a first outlet region (10) for air which can be supplied via an air channel (4) and a second outlet region (11), separated from this, which can be connected with a channel (9) via which a gaseous perfume can be supplied,
**characterised in**
**that** a flap-like shut-off element (16) is provided via which the inflow cross-section for air which can be supplied can be shut off, wherein the gaseous perfume flow can always be supplied independently of the position of the shut-off element (16).

8. Air outlet nozzle according to claim 7,
**characterised in**
**that** the first and the second outlet region (10, 11) are separated from one another via a stationary wall element (15).

9. Air outlet nozzle according to claim 7,
**characterised in**
**that** the first and the second outlet region (10, 11) are separated via an adjustable wall element (15).

10. Air outlet nozzle according to any of claims 7 to 9,
**characterised in**
**that** the wall element (15) is pivotably supported.

11. Air outlet nozzle according to claim 9 or 10,
**characterised in**
**that** on the front side of the air outlet nozzle (3) is provided a manual actuating element for adjusting the wall element (15).

## Revendications

1. Véhicule automobile comprenant un dispositif de ventilation pour l'amenée d'air à l'intérieur du véhicule , lequel dispositif de ventilation comprend au moins une buse de sortie d'air dirigée vers l'intérieur du véhicule, à laquelle de l'air peut être amené par le biais d'un canal d'air, dans lequel la buse de sortie d'air (3) présente une première zone de sortie (10) pour l'air amené et une seconde zone de sortie (11) séparée de celle-ci qui est raccordée à un canal (9) par le biais duquel un parfum gazeux peut être amené,
**caractérisé en ce**
**qu'**un élément d'arrêt (16) de type volet est prévu, par le biais duquel la section transversale d'afflux pour de l'air amené peut être obturée, dans lequel le courant de parfum gazeux peut être amené en permanence indépendamment de la position de l'élément d'arrêt (16).

2. Véhicule automobile selon la revendication 1,
**caractérisé en ce**
**que** la première et la seconde zone de sortie (10, 11) sont séparées l'une de l'autre par le biais d'un élément de paroi (15) fixe.

3. Véhicule automobile selon la revendication 1,
**caractérisé en ce**
**que** la première et la seconde zone de sortie (10, 11) sont séparées par le biais d'un élément de paroi (15) réglable de telle manière que dans une position de fermeture de l'élément de paroi (15) l'air affluant ne soit amené qu'à la première zone de sortie (10) alors qu'en cas d'élément de paroi (15) ouvert l'air est amené aux deux zones de sortie (10, 11).

4. Véhicule automobile selon la revendication 3,
**caractérisé en ce**
**que** l'élément de paroi (15) est logé de manière pivotante.

5. Véhicule automobile selon la revendication 3 ou 4,
**caractérisé en ce**
**que** sur le côté dirigé vers l'intérieur de la buse de sortie d'air (3) un élément de commande manuel est prévu pour le réglage de l'élément de paroi (15).

6. Véhicule automobile selon l'une quelconque des revendications précédentes, **caractérisé en ce**
**qu'**un tuyau menant dans la seconde zone de sortie (11) est prévu en tant que canal (9).

7. Buse de sortie d'air pour un véhicule automobile selon l'une quelconque des revendications précédentes, dans laquelle elle présente une première zone de sortie (10) pour de l'air pouvant être amené par le biais d'un canal d'air (4) et une seconde zone de sortie (11) séparée de celle-ci qui peut être raccordée à un canal (9) par le biais duquel un parfum gazeux peut être amené,
**caractérisé en ce**
**qu'**un élément d'arrêt (16) de type volet est prévu, par le biais duquel la section transversale d'afflux pour de l'air pouvant être amené peut être obturée, dans laquelle le courant de parfum gazeux peut être amené en permanence indépendamment de la position de l'élément d'arrêt (16).

8. Buse de sortie d'air selon la revendication 7,
**caractérisée en ce**
**que** la première et la seconde zone de sortie (10, 11) sont séparées l'une de l'autre par le biais d'un élément de paroi (15) fixe.

9. Buse de sortie d'air selon la revendication 7,
**caractérisée en ce**
**que** la première et la seconde zone de sortie (10, 11) sont séparées par le biais d'un élément de paroi (15) réglable.

10. Buse de sortie d'air selon l'une quelconque des revendications 7 à 9,
**caractérisée en ce**
**que** l'élément de paroi (15) est logé de manière pivotante.

11. Buse de sortie d'air selon la revendication 9 ou 10,
**caractérisée en ce**
**que** sur le côté avant de la buse de sortie d'air (3) un élément de commande manuel est prévu pour le réglage de l'élément de paroi (15).
